# FASCICULE DE BREVET EUROPEEN

(11) **EP 3 551 306 B1**
(45) Date de publication et mention de la délivrance du brevet: **23.08.2023**
(21) Numéro de dépôt: 17826282.0
(22) Date de dépôt: 05.12.2017
(51) Int. Cl.: A63H 33/00, A63J 5/02, A63J 25/00, F41H 9/06

(54) **APPAREIL GÉNÉRATEUR D'EFFETS VISUELS TRIDIMENSIONNELS, ET DISPOSITIF GÉNÉRATEUR DE FUMÉE POUR UN TEL APPAREIL**
VORRICHTUNG ZUR ERZEUGUNG DREIDIMENSIONALER VISUELLER EFFEKTE UND NEBELMASCHINE FÜR SOLCH EINE VORRICHTUNG
APPARATUS FOR GENERATING THREE-DIMENSIONAL VISUAL EFFECTS, AND SMOKE-GENERATING DEVICE FOR SUCH AN APPARATUS

(30) Priorité: 06.12.2016 FR 1601734; 28.04.2017 FR 1770433
(43) Date de publication de la demande: 16.10.2019
(73) Titulaire: Chau, Michel, 91160 Champlan (FR)
(72) Inventeur: Chau, Michel, 91160 Champlan (FR)
(74) Mandataire: Le Forestier, Eric
(86) Numéro de dépôt international: PCT/IB2017/057654
(87) Numéro de publication internationale: WO 2018/104863

(56) Documents cités:
- EP-A1- 2 955 474
- FR-A1- 2 671 871
- FR-A1- 2 794 990
- US-A- 4 990 290
- US-A1- 2015 105 167

## Description

### Domaine de l'invention

La présente invention concerne d'une façon générale le domaine des appareils pour engendrer des motifs lumineux tridimensionnels. Elle s'applique en particulier aux dispositifs destinés à restituer l'effet d'armes factices lumineuses du type « sabre Laser », pour des effets spéciaux, des jeux, des spectacles, etc.

### Arrière-plan de l'invention

Il est connu par le document WO2006064190A1 un générateur de fumée utilisant la pompe péristaltique comme pompe d'alimentation du liquide à vaporiser.

Il est connu par le document WO2014030987A1 un générateur de fumée. Il a pour principal inconvénient sa grande taille, ce qui le rend encombrant et non portatif. Il est par ailleurs relié à une alimentation secteur, ce qui exclut toute utilisation nomade.

Il est connu également par le document EP2837987A2 un générateur de fumée permettant de maîtriser les paramètres de la fumée sans pour autant être couplé à un dispositif de projecteur lumineux.

Il est connu par le document WO2013049901A1 un dispositif portatif qui associe un système de production de fumée avec une source lumineuse, mais dans deux équipements distincts et sans aucune corrélation.

Enfin on connaît par les documents FR 2 671 871 A1, FR 2 794 990 A1 et US 2015/105167 A1 des dispositifs qui associent dans un même boîtier un générateur de fumée et un générateur de lumière, sans corrélation particulière entre eux.

### Résumé de l'invention

La présente invention vise à permettre de matérialiser un effet visuel tridimensionnel de manière particulièrement prévisible, en définissant un espace de fumée synthétique de géométrie limitée servant de support de projection à une ou plusieurs sources lumineuses.

On propose ainsi selon l'invention un appareil générateur d'effets visuels tridimensionnels tel que défini dans la revendication 1.

L'appareil comprend en outre facultativement les caractéristiques additionnelles définies dans les revendications dépendantes.

L'invention permet, via un volume défini de vapeur (typiquement une vapeur de glycérol), d'imprimer sur cet espace de manière précise et très visible, une image en trois dimensions. Les mouvements de la ou des sources lumineuses (ainsi que leur pilotage en intensité et en couleurs le cas échéant) permettent apparaître des formes tridimensionnelles, telles un cylindre, un cône, un faisceau, une pyramide, ou des formes plus complexes telles une flamme. Avec des sources de différentes couleurs, l'appareil permet d'engendrer des effets visuels multicolores qui en se mélangeant produisent un spectre de couleurs.

L'appareil selon l'invention peut être compact, portatif et tenu dans la main.

L'expérience l'utilisateur peut être augmentée par l'utilisation de système audio et un moteur vibrant produisant un effet de « retour de force ».

### Brève description des dessins

D'autres aspects, buts et avantages de la présente invention apparaîtront mieux à la lecture de la description détaillée suivante d'une forme de réalisation préférée de celle-ci, donnée à titre d'exemple non limitatif et faite en référence aux dessins annexés, sur lesquels :
- la Figure 1 est une vue d'ensemble schématique en éclaté axial des constituants principaux d'un appareil selon une forme de réalisation de l'invention,
- La Figure 2 est une vue d'ensemble de l'appareil,
- la Figure 3 est une vue en élévation latérale d'un dispositif de guidage de fumée susceptible d'équiper l'appareil des Figures 1 et 2,
- les Figures 4A et 4B sont deux vues en perspective éclatée selon deux points de vue différents du dispositif de la Figure 3,
- la Figure 5 est une vue d'ensemble schématique analogue à la Figure 1, avec le dispositif de guidage des Figures 3, 4A et 4B, et
- la Figure 6 est une vue à échelle agrandie des détails d'une forme de réalisation particulière d'une buse de l'appareil.

### Description détaillée d'une forme de réalisation préférée

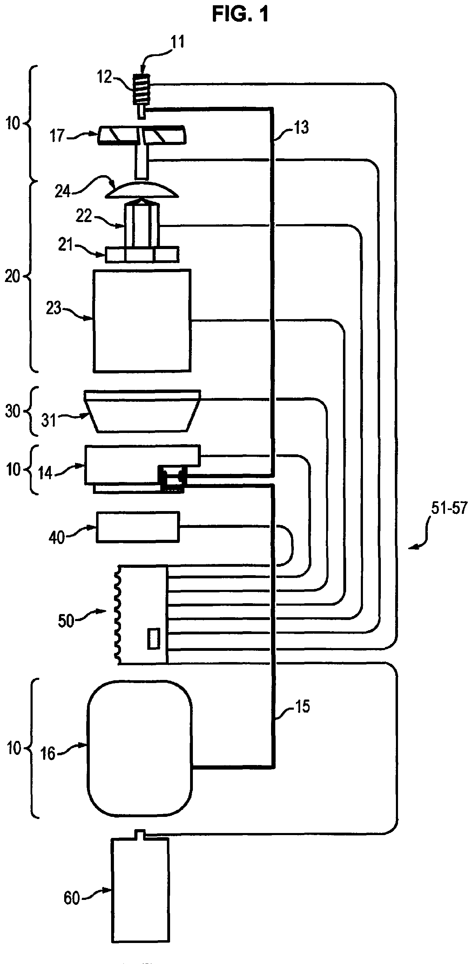

En référence tout d'abord à la Figure 1, un appareil de génération d'effets lumineux tridimensionnels selon l'invention comprend tout d'abord un dispositif de génération de fumée 10 comprenant une buse 11 entourée d'une résistance électrique chauffante 12.

La chaleur engendrée par la résistance 12 permet de vaporiser le glycérol. Avantageusement, cette résistance est constituée d'un fil résistif d'une résistivité électrique de quelques dizaines d'Ohms/mètre, apte à générer dans la buse 11 une température de l'ordre de 180 à 250 °C, de préférence ajustable. La résistance est pilotée par une unité centrale 50 sous forme d'une carte électronique animée par un microcontrôleur, que l'on décrira plus loin. L'ensemble de l'appareil est alimenté par une batterie rechargeable 60.

En faisant varier par commande au niveau de l'unité centrale 50 la température de chauffe, on fait varier la densité de vapeur de glycérol recherchée, en fonction de l'effet visuel recherché. Cette commande peut être réalisée dans une forme de réalisation de base par un simple interrupteur commandé mettant sélectivement la résistance 12 sous tension ou hors tension. On peut également effectuer un ajustement de la puissance délivrée en faisant varier la tension d'alimentation de la résistance, en recourant à une modulation de largeur d'impulsion PWM, etc.

De façon non illustrée, la résistance 12 est entourée d'un isolant thermique, par exemple de type laine minérale, et l'ensemble est protégé par une gaine rigide, par exemple une gaine métallique perforée à travers laquelle la vapeur de glycérol générée par le chauffage, sous forme de fumée plus ou moins dense, peut sortir.

Le dispositif générateur de fumée 10 comprend également une turbine 17 destinée à propulser la vapeur de glycérol générée et piloté par l'unité centrale 30. En ajustant la vitesse de rotation de la turbine, on peut propulser la fumée plus ou moins loin de la buse 11, de façon stable ou variable, en fonction de l'effet visuel recherché.

La buse 11, réalisée en métal de façon à résister à la chaleur, est reliée par une conduite 13 par exemple en silicone à une pompe de distribution de glycérol 14. Cette dernière est reliée par une autre conduite 15 à un réservoir de glycérol 16, dotée d'un bouchon (non représenté) pour pouvoir le remplir.

La pompe 14, pilotée à partir de l'unité centrale 50, permet d'alimenter la buse 11 en glycérol à partir du réservoir 16. Ce pilotage d'effectue de façon coordonnée avec le chauffage par la résistance 12 de façon à générer au niveau de la buse 11 la densité de vapeur recherchée en fonction de l'effet visuel à obtenir.

La pompe est de préférence une pompe péristaltique ou une pompe à piston, d'autres types de pompes pouvant bien entendu être utilisées.

Le glycérol est choisi pour sa viscosité et ses propriétés physico-chimiques bien connues de génération de fumée potentiellement très dense lorsqu'il est échauffé. Il est non toxique et largement utilisé notamment dans le domaine pharmaceutique. D'autres substances ayant des propriétés analogues peuvent bien entendu être utilisées.

L'appareil comprend en outre un dispositif générateur de lumière 20. Ce dispositif 20 comprend un plateau tournant 21 sur lequel sont fixées une ou plusieurs sources lumineuses 22, de préférence des sources de type diode électroluminescente LED ou diode Laser.

Le choix du type de diode Laser est effectué en fonction de la puissance lumineuse requise et d'éventuelles contraintes règlementaires.

La ou chaque source engendre un faisceau lumineux plus ou moins concentré.

Le plateau tournant 21 est entraîné au niveau d'un axe (non représenté) par un motoréducteur 23 piloté par l'unité centrale 50 de façon à pouvoir tourner sur lui même sur un axe, confondu avec un axe général de l'appareil, à une vitesse de préférence réglable.

Cette vitesse est comprise typiquement entre 10 et 30 tours/secondes, de façon à ce que l'effet visuel obtenu, grâce à la rémanence de l'œil humain, paraisse stable. En variante, on peut prévoir des mouvements plus lents et/ou irréguliers de manière à obtenir d'autres types d'effets visuels.

Le dispositif générateur de lumière comprend également un ensemble optique 24, constitué par une ou plusieurs lentilles, destiné à diriger le faisceau engendré par la source lumineuse (ou les faisceaux engendrés par une pluralité de sources) vers une région de l'appareil où la fumée est émise (région de la buse 11). De préférence, le ou chaque faisceau en sortie de l'ensemble optique 24 est un faisceau mince, de contours nets, de telle sorte que la coopération de la lumière avec la fumée lorsqu'elle traverse cette dernière puisse engendrer une variété d'effets visuels (fonction notamment de l'intensité de la fumée, de la distance à laquelle elle est propulsée, de l'intensité lumineuse, le la couleur de la lumière si les sources permettent de faire varier celle-ci, etc.) plutôt qu'un simple halo qui serait obtenu avec une lumière trop diffuse.

L'appareil peut également comprendre un dispositif générateur de sons 30 doté d'un haut-parleur 31 ou autre transducteur acoustique, la génération des sons s'effectuant de préférence au niveau de l'unité centrale XX. Il peut également comprendre un générateur 40 de vibrations mécaniques (connu sous le nom de mécanisme de « retour de force » dans le domaine des jeux et jouets), de façon à restituer (par exemple dans une poignée de l'appareil, non représentée sur la Figure 1), une action mécanique associée à certains mouvements de l'appareil.

L'appareil comprend également de façon avantageuse un capteur de mouvement (typiquement un centrale inertielle ou un jeu d'accéléromètres), de façon non explicitement représentée et de préférence intégré à la carte électronique de l'unité centrale 50.

L'unité centrale 50 pilote l'ensemble des éléments décrits plus haut, comme déjà indiqué, en y étant reliée par un ensemble de conducteurs électriques 51-57.

La batterie 60 est avantageusement une batterie de type lithium-ion de tension et de capacité appropriées.

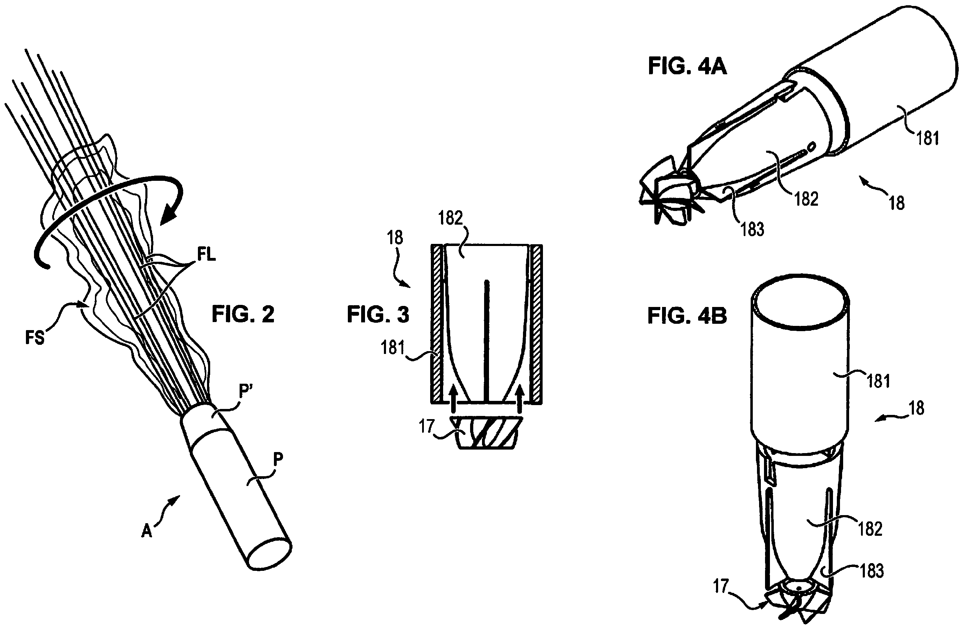

La Figure 2 est une vue d'ensemble d'un appareil A selon l'invention.

L'ensemble des éléments décrits plus haut sont logés dans une poignée P de l'appareil. En variante, certains éléments sont logés dans la poignée P, et d'autres, dont notamment la buse 11 du générateur de fumée et la turbine, dans une partie P' prolongeant la poignée P.

Une ouverture O formée dans cette partie P' permet la sortie de la fumée synthétique FS, formant une colonne traversée par le ou les faisceaux lumineux FL, en mouvement à l'aide du plateau tournant 21, de matière à restituer ici l'effet visuel d'un cylindre lumineux.

On va maintenant décrire le fonctionnement de l'appareil.

Pendant une phase de démarrage, le dispositif de chauffage 12 de la buse 11 est mis en chauffe pendant une certaine durée, typiquement quelques secondes, alors que la pompe 14 est actionnée pour fournir du glycérol.

Une fois qu'une quantité de fumée suffisante sort de la buse 11, les sources lumineuses 22 sont allumées et mises en mouvement par le motoréducteur 23, tandis que la turbine 17 est mise en route pour propulser la fumée et former la colonne FS jusqu'à une distance contrôlée, pour ainsi constituer l'enveloppe de vapeur dans laquelle va se matérialiser l'image tridimensionnelle grâce au(x) faisceau(x) lumineux.

En régime stationnaire, le pilotage du dispositif de chauffage 12, de la pompe 14, de la turbine 17 et des sources lumineuses (dans leur mouvement grâce au motoréducteur 23 et le cas échéant en couleur et/ou en intensité) permet de faire varier dans une large mesure l'effet visuel obtenu.

En référence maintenant aux Figures 3, 4A et 4B, on a représenté un élément complémentaire du dispositif générateur de fumée 10, qui comprend un guide 18 formé d'un élément extérieur 181 généralement tubulaire et d'un élément intérieur 182 dont la largeur augmente progressivement, de préférence mais non limitativement selon le profil illustré, à partir d'une région d'entrée adjacente à la turbine 17, jusqu'à une région de sortie. On définit ainsi un canal annulaire C de largeur extérieure généralement constante et de largeur intérieure variable. Des entretoises 183 orientées radialement permettent d'assurer un calage axe-sur-axe des éléments 181, 182 tout en canalisant le flux selon l'axe.

On comprend que ce guide permet de générer à sa sortie un flux laminaire de section annulaire, et l'on a observé qu'un tel flux permettait d'obtenir une colonne de fumée FS qui reste d'une largeur essentiellement constante et essentiellement homogène sur une distance importante, pour obtenir un effet visuel de type « sabre Laser » particulièrement réaliste (en conjonction avec un ensemble de faisceaux lumineux parallèles tournant autour de l'axe du plateau 21). Dans cette forme de réalisation le générateur de lumière 20 vient se loger dans l'espace intérieur défini par le guide 18 de manière à avoir une bonne compacité. La fumée sort du guide 18 périphériquement sous forme d'une couronne entourant le générateur de lumière 20.

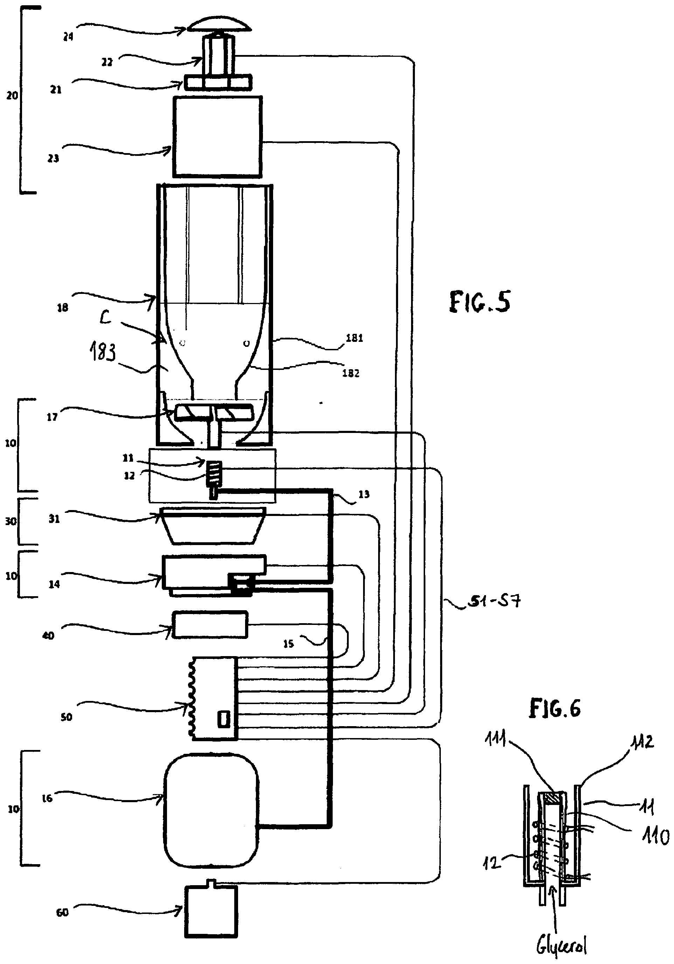

La Figure 5 est une vue analogue à la Figure 1, où le dispositif de guidage a été intégré selon cette variante. Sur cette Figure, des éléments ou parties identiques à ceux de la Figure 1 sont désignés par les mêmes signes de référence et ne seront pas à nouveau décrits.

On observe que dans cette réalisation le dispositif de guidage 18 est situé en aval de la buse 11 où la vapeur de glycérol est produite, et que le générateur de lumière 20 est situé en aval de ce même dispositif de guidage.

On a représenté sur la Figure 6 une vue agrandie d'une structure de buse 11 selon l'invention.

La buse 11 comprend un tube de fibre de verre 110 entouré d'un fil résistif 12 formant la résistance électrique chauffante. Le tube de fibre de verre présente une certaine porosité qui autorise le glycérol liquide à transiter en direction radiale à partir de l'intérieur du tube 110, alimenté en glycérol par la pompe 14, vers l'extérieur où il forme la fumée sous l'effet du fil résistif 12, cette fumée se propageant initialement latéralement entre les spires du fil résistif 12. Cette porosité du tube 110 permet à celui-ci de constituer une petite réserve tampon de glycérol, régulant la production de fumée.

Cette petite réserve de glycérol, maintenue par capillarité dans les fibres de verre, permet également de stabiliser la température du fil résistif grâce à une évaporation du glycérol d'autant plus grande que la température est élevée, et donc de réduire le risque d'auto-combustion du glycérol liquide. On a en effet observé qu'avec une buse sèche (ne retenant pas de glycérol), le fil résistif chauffe plus intensément et lors d'une arrivée de glycérol, le premier contact de ce dernier avec la résistance surchauffée est susceptible de l'enflammer.

Le fourreau 110 est obturé à son extrémité supérieure en 111, le glycérol étant contraint de circuler radialement en direction du fil résistif 12.

La buse comprend également un fourreau extérieur 112, de préférence métallique, dans lequel le tube obturé 110 et le fil résistif 12 sont logés. Le fourreau 112 est ouvert à son extrémité libre (en haut sur la Figure) pour permettre à la fumée de s'échapper en direction de la turbine 17. Ce fourreau 112 permet également de limiter le volume d'air entourant le tube 110, de telle sorte qu'en cas de début de combustion du glycérol, l'alimentation de la combustion avec l'oxygène de l'air soit freinée, et que la combustion s'interrompe ainsi spontanément.

On notera ici que la porosité du tube 110 peut avantageusement être obtenue en « rodant » la buse pendant un certain temps par échauffement à l'aide du fil résistif, la résine qui conventionnellement amalgame ensemble les fibres de verre se consumant pour laisser entre les fibres des espaces vides conduisant à sa porosité. Dans le même temps, le fil résistif 12 qui enserre le fourreau contribue à sa cohésion mécanique en dépit de la dégradation de la résine.

Si nécessaire, un élément de structure tel qu'un tube métallique (non représenté) entourant partiellement le fourreau 110 est prévu pour donner à l'ensemble une solidité suffisante.

Bien entendu, la présente invention n'est nullement limitée aux formes de réalisation décrites et représentées, mais l'homme du métier saura y apporter de nombreuses variantes et modifications.

## Revendications

1. Appareil générateur d'effets visuels tridimensionnels, comprenant :
un générateur de fumée (10) piloté comprenant un source de fumée synthétique et un moyen pour propulser directionnellement la fumée produite par le générateur, la source de fumée comprenant une buse, et
un générateur de lumière piloté (20), apte à engendrer un ou plusieurs faisceaux lumineux dans le faisceau de fumée,
l'appareil étant **caractérisé en ce que** le moyen de propulsion comprend une turbine (17) tournant autour d'un axe généralement confondu avec un axe de la buse (11) et un dispositif (18) de concentration du flux de la turbine pour former un faisceau de fumée allongé dans une certaine direction, et **en ce que** le ou les faisceaux lumineux sont engendrés selon la direction d'allongement du faisceau de fumée et sont essentiellement contenus dans ledit faisceau de fumée,

2. Appareil selon la revendication 1, dans lequel la buse (11) est dotée d'un moyen de chauffage (12), alimentée en une substance liquide apte à former une fumée dense lors de son échauffement.

3. Appareil selon la revendication 2, dans lequel la buse comprend un élément tubulaire fibreux apte à former un zone tampon de stockage de ladite substance liquide.

4. Appareil selon la revendication 3, dans lequel le moyen de chauffage (12) comprend un fil résistif entourant ledit élément tubulaire fibreux.

5. Appareil selon la revendication 4, dans lequel le fil résistif enserre l'élément tubulaire fibreux de manière à contribuer à la cohésion mécanique de ce dernier.

6. Appareil selon l'une des revendications 2 à 5, dans lequel la buse et le moyen de chauffage sont entourés d'un fourreau borgne (112) généralement étanche à l'air.

7. Appareil selon l'une des revendications 1 à 6, dans lequel le dispositif de concentration (18) définit un canal annulaire de largeur extérieure généralement constante et de largeur intérieure variable.

8. Appareil selon l'une des revendications 1 à 7, dans lequel le générateur de lumière comprend au moins une source lumineuse montée sur un élément mobile en rotation (21).

9. Appareil selon la revendication 8, dans lequel la ou les sources lumineuses sont commandées en intensité en synchronisme avec la rotation de l'organe tournant.

10. Appareil selon l'une des revendications 1 à 9, **caractérisé en ce que** le générateur de lumière comprend au moins un élément optique (24) de concentration de la lumière.

11. Appareil selon l'une des revendications 1 à 10, dans lequel le générateur de lumière comprend au moins une source lumineuse comprise dans un groupe comprenant les diodes électroluminescentes et les diodes Laser.

## Patentansprüche

1. Vorrichtung zur Erzeugung dreidimensionaler visueller Effekte, umfassend:
einen gesteuerten Rauchgenerator (10) umfassend eine synthetische Rauchquelle und ein Mittel zum gerichteten Ausstoßen des von dem Generator erzeugten Rauchs, wobei die Rauchquelle eine Düse umfasst, und
einen gesteuerten Lichtgenerator (20), der in der Lage ist, einen oder mehrere Lichtstrahlen in dem Rauchstrahl herzustellen,
wobei die Vorrichtung **dadurch gekennzeichnet ist, dass** das Mittel zum Ausstoßen eine Turbine (17) umfasst, die sich um eine Achse dreht, die im Allgemeinen mit einer Achse der Düse (11) zusammenfällt, und eine Vorrichtung (18) zur Konzentration der Turbinenströmung, um einen länglichen Rauchstrahl in einer bestimmten Richtung zu bilden, und **dadurch, dass** der eine oder die mehreren Lichtstrahlen entsprechend der Verlängerungsrichtung des Rauchstrahls hergestellt werden und im Wesentlichen in dem Rauchstrahl enthalten sind.

2. Vorrichtung nach Anspruch 1, wobei die Düse (11) mit einem Heizmittel (12) versehen ist, das mit einer flüssigen Substanz versorgt wird, die in der Lage ist, bei Erwärmung dichten Rauch zu bilden.

3. Vorrichtung nach Anspruch 2, wobei die Düse ein faserhaltiges Rohrelement umfasst, das in der Lage ist, eine Pufferzone zur Speicherung der flüssigen Substanz zu bilden.

4. Vorrichtung nach Anspruch 3, wobei das Heizmittel (12) einen Widerstandsdraht umfasst, der das faserige Rohrelement umgibt.

5. Vorrichtung nach Anspruch 4, wobei der Widerstandsdraht das faserige Rohrelement so umschließt, dass dessen mechanische Kohäsion unterstützt wird.

6. Vorrichtung nach einem der Ansprüche 2 bis 5, wobei die Düse und das Heizmittel von einer im Allgemeinen luftdichten Blindmuffe (112) umgeben sind.

7. Vorrichtung nach einem der Ansprüche 1 bis 6, wobei die Konzentrationsvorrichtung (18) einen ringförmigen Kanal mit allgemein konstanter äußerer Breite und variabler innerer Breite definiert.

8. Vorrichtung nach einem der Ansprüche 1 bis 7, wobei der Lichtgenerator mindestens eine Lichtquelle umfasst, die an einem drehbeweglichen Element (21) befestigt ist.

9. Vorrichtung nach Anspruch 8, wobei die Intensität der einen oder mehreren Lichtquellen synchron mit der Drehung des Drehelements gesteuert wird.

10. Vorrichtung nach einem der Ansprüche 1 bis 9, **dadurch gekennzeichnet, dass** der Lichtgenerator mindestens ein optisches Element (24) zur Lichtkonzentration umfasst.

11. Vorrichtung nach einem der Ansprüche 1 bis 10, wobei der Lichtgenerator mindestens eine Lichtquelle umfasst, die in einer Gruppe enthalten ist, die die Leuchtdioden und die Laserdioden umfasst.

## Claims

1. An apparatus for generating 3D visual effects, comprising:
a controlled smoke generator (10) comprising a synthetic smoke source and a means for directionally propelling the smoke produced by the generator, the smoke source comprising a nozzle, and
a controlled light generator (20), capable of generating one or more light beams in the smoke beam,
the apparatus being **characterized in that** the propelling means comprises a turbine (17) rotating around an axis generally aligned with an axis of the nozzle (11) and a device (18) for concentrating the turbine flow in order to form a smoke beam which is elongated in a certain direction, and **in that** the light beam or light beams is/are generated along the elongation direction of the smoke beam and is/are essentially contained in said smoke beam.

2. An apparatus according to claim 1, wherein the nozzle (11) is provided with a heating means (12), supplied with a liquid substance capable of forming a dense smoke when heating up.

3. An apparatus according to claim 2, wherein the nozzle comprises a fibrous tubular member capable of forming a buffer storage zone for said liquid substance.

4. An apparatus according to claim 3, wherein the heating means (12) comprises a resistive wire surrounding said fibrous tubular member.

5. An apparatus according to claim 4, wherein the resistive wire tightly surrounds the fibrous tubular member so as to contribute to the mechanical cohesion of the latter.

6. An apparatus according to one of claims 2 to 5, wherein the nozzle and the heating means are surrounded by a generally air-tight blind sleeve (112).

7. An apparatus according to one of claims 1 to 6, wherein the concentrating device (18) defines an annular channel having a generally constant outer width and a variable inner width.

8. An apparatus according to one of claims 1 to 7, wherein the light generator (20) comprises at least one light source mounted on a rotatably movable member (21).

9. An apparatus according to claim 8, wherein the light source or sources is/are intensity-controlled in synchronism with the revolution of the rotating member.

10. An apparatus according to one of claims 1 to 9, **characterized in that** the light generator comprises at least one light concentration optical element (24).

11. An apparatus according to one of claims 1 to 10, wherein the light generator comprises at least one light source comprised in a group comprising light emitting diodes and Laser diodes.
